# EUROPÄISCHE PATENTANMELDUNG

(11) **EP 4 339 564 A1**
(43) Veröffentlichungstag der Anmeldung: **20.03.2024**
(21) Anmeldenummer: 23194183.2
(22) Anmeldetag: 30.08.2023
(51) Int. Cl.: G01H 1/00, G01M 13/045, G01H 17/00, G01M 13/028

(54) **VERFAHREN UND VORRICHTUNG ZUM ERFASSEN VON SCHWINGUNGEN EINES BAUTEILS**

(30) Priorität: 15.09.2022 DE 102022209666
(71) Anmelder: Robert Bosch GmbH, 70442 Stuttgart (DE)
(72) Erfinder: Mehling, Hermann, 97753 Karlstadt-Stetten (DE); Backhaus, Stefan-Georg, 97846 Partenstein (DE)

(57) **Zusammenfassung**

Die Erfindung betrifft ein Verfahren, ein Computerprogramm und eine Vorrichtung (10) zum Erfassen von Schwingungen eines Bauteils (1), wobei ein erstes Schwingungssignal von einem ersten Mikrofon (2) erfasst wird, das in mechanischen Kontakt mit dem Bauteil (1) angeordnet ist, wobei ein zweites Schwingungssignal von einem zweiten Mikrofon (3) erfasst wird, dass nicht in mechanischen Kontakt mit dem Bauteil (1) angeordnet ist, wobei aus dem ersten Schwingungssignal und aus dem zweiten Schwingungssignal ein Ergebnissignal ermittelt wird.

## Beschreibung

Die vorliegende Erfindung betrifft ein Verfahren und eine Vorrichtung zum Erfassen von Schwingungen eines Bauteils sowie eine Recheneinheit und ein Computerprogramm zu dessen Durchführung.

### Hintergrund der Erfindung

Die Zustandsüberwachung (Condition Monitoring) ist ein wichtiges Instrument, um die Zuverlässigkeit und optimale Funktionsweise kritischer Bauteile von Maschinen und Anlagen zu sichern. Insbesondere für Instandhaltungsstrategien (Maintenance, Repair and Overhaul, MRO) kann die regelmäßige Erfassung von Maschinenzuständen entscheidende Informationen liefern.

Bei der sog. Köperschall-Analyse werden Schwingungen in Bauteilen erfasst, um Aussagen über den aktuellen Zustand ableiten zu können. Hierzu können piezoelektrische Beschleunigungssensoren eingesetzt werden, welche aufgrund ihrer hohen Kosten jedoch den Anwendungsbereich dieser Methode einschränken.

### Offenbarung der Erfindung

Erfindungsgemäß werden ein Verfahren und eine Vorrichtung zum Erfassen von Schwingungen eines Bauteils sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung betrifft im Einzelnen ein Verfahren zur Erfassung von Schwingungen eines Bauteiles, wobei ein erstes Schwingungssignal von einem ersten Mikrofon erfasst wird, das in mechanischem Kontakt mit dem Bauteil angeordnet ist, ein zweites Schwingungssignal von einem zweiten Mikrofon erfasst wird, das nicht in mechanischem Kontakt mit dem Bauteil angeordnet ist, und wobei aus dem ersten Schwingungssignal und aus dem zweiten Schwingungssignal ein Ergebnissignal ermittelt wird.

Im Rahmen der Erfindung wird eine verbesserte und kostengünstige Möglichkeit z.B. für eine Zustandsüberwachung (Condition Monitoring) eines Bauteils mittels Mikrofonen vorgestellt, wobei ein Ergebnissignal zumindest aus zwei unterschiedlich erfassten Schwingungssignalen bestimmt wird. Die Erfindung kann vorteilhaft mit Mikrofonen anstelle von aufwendigen Piezosensoren, insbesondere MEMS-Mikrofonen (MEMS: mikroelektromechanische Systeme), wie z.B. Kondensatormikrofone in Mikrosystemtechnik, implementiert werden.

MEMS-Mikrofone sind günstig in der Anschaffung und meist mit einer I2S-Schnittstelle ausgestattet. Mit MEMS-Mikrofonen lassen sich Abtastraten von 44 kHz problemlos realisieren und somit die Auflösung und Güte der Erfassung von Schwingungen verbessern. Beispielsweise besitzen im Unterschied dazu aktuelle MEMS-Beschleunigungssensoren eine I2C-Schnittstelle, mit der sich im Schnellmodus nur Abtastraten von 2,6 kHz realisieren lassen.

Es hat sich auch gezeigt, dass die Zustandsüberwachung (Condition Monitoring) nur über die Erfassung des Luftschalls durch MEMS-Mikrofone meist an der Unterscheidung von Maschinen- und Umgebungsgeräuschen scheitert. Die Erfindung befasst sich daher insbesondere mit der Erfassung des Körperschalls eines Bauteils unter Berücksichtigung des störenden Luftschalls. Primäres Ziel ist es, ein Schwingungssignal eines Bauteils ohne störende Luftschwingungen zu ermitteln. Hierbei werden zwei MEMS-Mikrofone verwendet, wobei ein erstes mit dem Bauteil in mechanischem Kontakt angeordnet ist und somit den Luftschall und den Körperschall als ein erstes Schwingungssignal erfasst. Ein zweites MEMS-Mikrofon, das nicht in mechanischem Kontakt (entkoppelt) mit dem Bauteil angeordnet ist, erfasst hingegen nur den Luftschall als ein zweites Schwingungssignal. Aus beiden Schwingungssignalen wird dann mittels eines geeigneten Rechen- oder Verarbeitungsverfahrens ein Ergebnissignal ermittelt, das insbesondere für die Zustandsüberwachung des Bauteils verwendet werden kann.

In einer Ausgestaltung werden aus dem erfassten ersten Schwingungssignal ein erstes Frequenzsignal und aus dem erfassten zweiten Schwingungssignal ein zweites Frequenzsignal ermittelt. Diese Ermittlung der Frequenzsignale wird insbesondere durch Anwendung eines mathematischen Verfahrens wie einer Fast-Fourier-Transformation (FFT) oder einer Diskret-Fourier-Transformation (DFT) auf das erste Schwingungssignal und auf das zweite Schwingungssignal durchgeführt. Hierbei erhält man ein erstes Frequenzsignal, bestehend aus den Frequenzanteilen des Luftschalls und den Frequenzanteilen des Körperschalls des Bauteils, sowie ein zweites Frequenzsignal bestehend aus nur den Frequenzanteilen des Luftschalls.

In einer Ausgestaltung wird das Ergebnissignal als ein Differenzsignal aus dem ersten Frequenzsignal und dem zweiten Frequenzsignal ermittelt. Durch die Bildung des Differenzsignals werden die in beiden Frequenzsignalen enthaltenen Frequenzanteile des Luftschalls voneinander abgezogen und ein alleine aus den Frequenzanteilen des Körperschalls des Bauteils bestehendes Ergebnissignal wird ermittelt.

In einer weiteren Ausgestaltung wird zuerst aus dem erfassten ersten Schwingungssignal und aus dem erfassten zweiten Schwingungssignal ein Differenzschwingungssignal ermittelt. Anschließend führt insbesondere die Anwendung eines mathematischen Verfahrens wie einer Fast-Fourier-Transformation (FFT) oder einer Diskret-Fourier-Transformation (DFT) auf dieses Differenzschwingungssignal zu einem Ergebnissignal, das nur aus den Frequenzanteilen des Körperschalls des Bauteils besteht.

In einer Ausgestaltung werden zur Erfassung von Schwingungssignalen insbesondere MEMS-Mikrofone verwendet. MEMS-Mikrofone sind kostengünstig, bieten eine gute Auflösung aufgrund hoher Abtastraten und lassen sich durch ihre kompakte Bauweise sehr gut an verschiedene Bauteilstrukturen anordnen.

In einer Ausgestaltung wird das Ergebnissignal, bestehend aus den Frequenzanteilen des Körperschalls des Bauteils für die Zustandsanalyse (Condition Monitoring) des Bauteils verwendet. Über die Analyse der Frequenzanteile des Körperschalls lassen sich zerstörungslos Schwachstellen an vor allem kritischen Bauteilen sehr einfach identifizieren.

Eine erfindungsgemäße Recheneinheit, z.B. ein Computersystem oder ein Körperschallmessgerät oder Zustandsanalysesystem, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt eine schematische Darstellung einer Vorrichtung zur Erfassung von Schwingungen eines Bauteils;
Figur 2a zeigt ein Ablaufschema eines Ausführungsbeispiels des erfindungsgemäßen Verfahrens zur Ermittlung eines Ergebnissignals nach einem ersten Ablauf;
Figur 2b zeigt ein Ablaufschema eines weiteren Ausführungsbeispiels des erfindungsgemäßen Verfahrens zur Ermittlung eines Ergebnissignals nach einem zweiten Ablauf.

### Detaillierte Beschreibung der Zeichnung

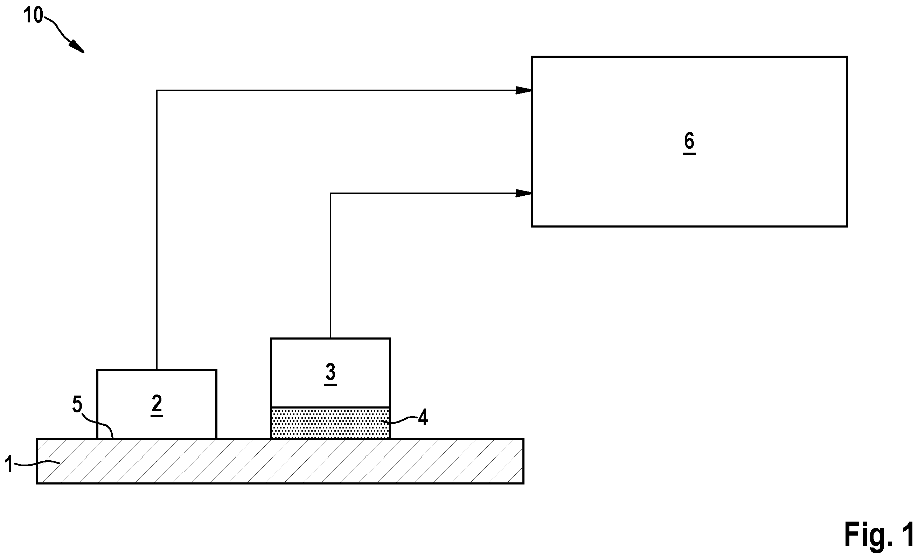

Figur 1 zeigt eine schematische Darstellung einer Vorrichtung 10 zum Erfassen von Schwingungen eines Bauteils 1, die zur Durchführung eines Ausführungsbeispiels des erfindungsgemäßen Verfahrens eingerichtet ist. Zur Erfassung eines ersten Schwingungssignales ist ein erstes Mikrofon 2 in einem mechanischen Kontaktschluss 5 mit dem Bauteil 1 angeordnet, so dass es den Körperschall des Bauteils 1 zusammen mit dem Luftschall als ein erstes Schwingungssignal erfasst. Der mechanische Kontaktschluss 5 kann z.B. mittels geeigneter Verklebung oder Verschraubung des ersten Mikrofones 2 mit dem Bauteil 1 erfolgen. Zur Erfassung eines zweiten Schwingungssignals ist ein zweites Mikrofon 3 nicht in mechanischem Kontakt (entkoppelt) mit dem Bauteil 1 angeordnet, so dass es nur den Luftschall 1 als ein zweites Schwingungssignal erfasst.

Die Entkopplung des zweiten Mikrofons kann nach den zu erwartenden Frequenzen der Körperschallschwingungen des Bauteils 1 durch Auswahl geeigneter Dämpfungselemente 4 (z.B. Elastomere oder Schraubendruckfedern) oder durch Anordnung des zweite Mikrofons 3 in einem Abstand (mit Luft dazwischen) zum Bauteil 1 realisiert werden. Ebenso ist jede Anordnung ist geeignet, die die Schwingungsübertragungen zwischen dem Bauteil 1 und dem zweiten Mikrofon 3 unterbindet.

Als Mikrofone können z.B. MEMS-Mikrofone verwendet werden, da sie sich aufgrund ihrer kompakten Bauweise in einem mechanischen Kontaktschluss sowie auch entkoppelt von einem Bauteil anordnen lassen und eine große Bandbreite haben.

Zur Ermittlung eines Ergebnissignals wird einer Recheneinheit 6 das erfasste erste Schwingungssignal und das erfasste zweite Schwingungssignal übergeben.

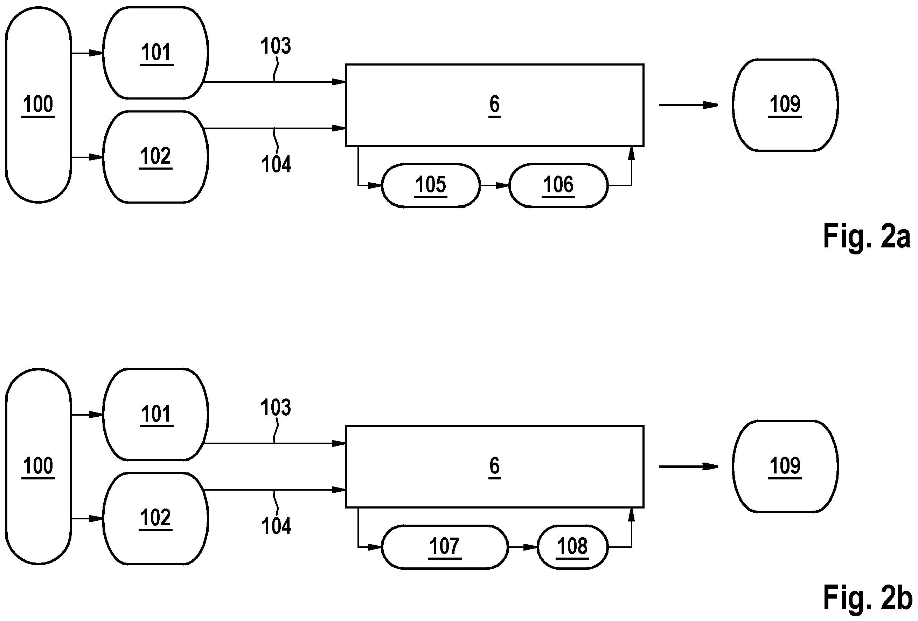

Figur 2a und Figur 2b beschreiben jeweils einen Ablauf einer beispielhaften Ermittlung eines Ergebnissignals in einem Blockdiagramm und werden nachfolgend unter Bezugnahme auf Figur 1 beschrieben. Dabei zeigt Figur 2a ein erstes Verfahren zur Ermittlung eines Ergebnissignals als Blockdiagramm.

In Block 100 beginnt das Verfahren. In Block 101 wird ein erstes Schwingungssignal von dem ersten Mikrofon 2 erfasst und zeitgleich wird in Block 102 ein zweites Schwingungssignal von dem zweiten Mikrofon 3 erfasst.

Anschließend werden sowohl das erste Schwingungssignal mittels Signalübertragung 103 und das zweite Schwingungssignal mittels Signalübertragung 104 an die Recheneinheit 6 übermittelt.

In Block 105 ermittelt die Recheneinheit 6 aus dem ersten Schwingungssignal ein erstes Frequenzsignal und aus dem zweiten Schwingungssignal ein zweites Frequenzsignal. Diese Ermittlung des ersten Frequenzsignals und des zweiten Frequenzsignals wird insbesondere durch Anwendung eines mathematischen Verfahrens wie einer Fast-Fourier-Transformation (FFT) oder einer Diskret-Fourier-Transformation (DFT) auf das erfasste erste Schwingungssignal und auf das erfasste zweite Schwingungssignal durchgeführt.

In Block 106 wird ein Differenzsignal, durch Differenzbildung aus dem ersten Frequenzsignal und dem zweiten Frequenzsignal, als Ergebnissignal durch die Recheneinheit 6 ermittelt. Das Ergebnissignal beinhaltet nur noch die Frequenzanteile des Körperschalls des Bauteils 1.

In Block 109 wird das Ergebnissignal, das nur noch die Frequenzen des Körperschalls des Bauteils 1 enthält, für weitere Zwecke, insbesondere eine Zustandsanalyse des Bauteils 1, verwendet.

Figur 2b zeigt ein zweites Verfahren zur Ermittlung eines Ergebnissignals.

In Block 100 beginnt das Verfahren.

In Block 101 wird ein erstes Schwingungssignal von einem ersten Mikrofon erfasst wird und zeitgleich in Block 102 ein zweites Schwingungssignal von einem zweiten Mikrofon erfasst wird. Anschließend werden sowohl das erste Schwingungssignal mittels Signalübertragung 103 und das zweite Schwingungssignal mittels Signalübertragung 104 an die Recheneinheit 6 übermittelt.

In Block 107 ermittelt die Recheneinheit 6 über Differenzbildung aus dem ersten Schwingungssignal und dem zweiten Schwingungssignal ein Differenzschwingungssignal.

In Block 108 wird insbesondere durch Anwendung eines geeigneten mathematischen Verfahrens (z.B. FFT oder DFT) auf das Differenzschwingungssignal ein Frequenzsignal als Ergebnissignal durch die Recheneinheit 6 ermittelt. Das Ergebnissignal beinhaltet nur noch die Frequenzanteile des Körperschalls des Bauteils 1.

In Block 109 wird das Ergebnissignal, das nur noch die Frequenzen des Körperschalls des Bauteils 1 enthält, für weitere Zwecke, insbesondere eine Zustandsanalyse des Bauteils 1, verwendet.

## Patentansprüche

1. Verfahren zum Erfassen von Schwingungen eines Bauteils (1),
wobei ein erstes Schwingungssignal von einem ersten Mikrofon (2) erfasst wird (101), das in mechanischem Kontakt mit dem Bauteil (1) angeordnet ist,
wobei ein zweites Schwingungssignal von einem zweiten Mikrofon (3) erfasst wird (102), dass nicht in mechanischem Kontakt mit dem Bauteil angeordnet ist,
wobei aus dem ersten Schwingungssignal und aus dem zweiten Schwingungssignal ein Ergebnissignal ermittelt wird (106, 108).

2. Verfahren nach Anspruch 1, wobei aus dem ersten Schwingungssignal ein erstes Frequenzsignal ermittelt wird (105) und aus dem zweiten Schwingungssignal ein zweites Frequenzsignal ermittelt wird (105), wobei insbesondere das erste Frequenzsignal und das zweite Frequenzsignal über eine Fast-Fourier-Transformation oder über eine Diskret-Fourier-Transformation ermittelt werden.

3. Verfahren nach Anspruch 2, wobei das Ergebnissignal als ein Differenzsignal aus dem ersten Frequenzsignal und dem zweiten Frequenzsignal ermittelt wird (106).

4. Verfahren nach Anspruch 1, wobei aus dem ersten Schwingungssignal und aus dem zweiten Schwingungssignal ein Differenzschwingungssignal ermittelt wird (107), und wobei aus dem Differenzschwingungssignal ein Frequenzsignal als Ergebnissignal ermittelt wird (108), wobei insbesondere das Frequenzsignal über eine Fast-Fourier-Transformation oder über eine Diskret-Fourier-Transformation ermittelt werden.

5. Verfahren nach einem der vorstehenden Ansprüche, wobei das erste Mikrofon (2) und/oder das zweite Mikrofon (4) ein MEMS-Mikrofon sind.

6. Verfahren nach einem der vorstehenden Ansprüche, wobei das Ergebnissignal für eine Zustandsanalyse des Bauteils (1) verwendet wird (109).

7. Recheneinheit (6), die dazu eingerichtet ist, alle Verfahrensschritte eines Verfahrens nach einem der vorstehenden Ansprüche durchzuführen.

8. Computerprogramm umfassend Befehle, die bei der Ausführung des Programms durch einen Computer diesen veranlassen, das Verfahren nach Anspruch 1 bis 6 auszuführen.

9. Computerlesbarer Datenträger, auf dem das Computerprogramm nach Anspruch 8 gespeichert ist.

10. Vorrichtung (10) zum Erfassen von Schwingungen eines Bauteils (1), die ein erstes Mikrofon (2), das in mechanischem Kontakt mit dem Bauteil (1) angeordnet ist, ein zweites Mikrofon (3), dass nicht in mechanischem Kontakt mit dem Bauteil angeordnet ist, und eine Recheneinheit (6) nach Anspruch 7 aufweist.
